# EUROPEAN PATENT APPLICATION

(11) **EP 2 391 165 A1**
(43) Date of publication of application: **30.11.2011**
(21) Application number: 09838888.7
(22) Date of filing: 28.12.2009
(51) Int. Cl.: H04W 56/00, H04W 4/04, H04W 52/02, H04W 84/10

(54) **INFORMATION PROCESSING APPARATUS, WIRELESS TERMINAL, INFORMATION PROCESSING PROGRAM, AND WIRELESS TERMINAL PROGRAM**

(30) Priority: 21.01.2009 JP 2009010912
(71) Applicant: Seiko Instruments Inc., Chiba-shi Chiba 261-8507 (JP)
(72) Inventor: MORIYA, Koichi, Chiba-shi Chiba 261-8507 (JP); KIMURA, Yoshimasa, Chiba-shi Chiba 261-8507 (JP); KOJIMA, Osamu, Chiba-shi Chiba 261-8507 (JP)
(74) Representative: Kenyon, Sarah Elizabeth
(86) International application number: PCT/JP2009/071813
(87) International publication number: WO 2010/084699

(57) **Abstract**

A management server (2) communicates with relay units (3) through a LAN, the relay units (3) are capable of communicating with wireless terminals (5), which are divided into groups, by short-range wireless communication, and the management server (2) transmits and receives information with the wireless terminals (5) through the relay units (3). A basic frame contains a synchronization signal for synchronizing the wireless terminals (5) to the relay units (3) and a data group for the respective wireless terminals (5). The wireless terminal (5) receives self-addressed data while synchronizing with the relay unit (3) by means of the synchronization signal. The management server (2) has a fast mode in which a duration of the basic frame is generated in T1 seconds and a normal mode in which the duration is generated in T2 seconds. In this case, T1<T2. The management server (2) generates the basic frame in the fast mode to transmit the basic frame when a quick response from the wireless terminals (5) is needed, and generates the basic frame in the normal mode to transmit the basic frame when only the synchronization is to be maintained.

## Description

### Technical Field

The present invention relates to an information processing apparatus, a wireless terminal, an information processing program, and a wireless terminal program for, for example, reducing power consumption at the wireless terminal.

### Background Art

In a store, shelf labels each displaying a price and the like of a product are placed on store shelves for convenience of customers.
The shelf labels are generally created by printing or handwriting on a paper medium, but in recent years, there has been an increasing use of electronic shelf labels each displaying product information on a liquid crystal display unit.
The electronic shelf label receives display information through, for example, infrared ray or the like and displays the received display information on the liquid crystal display unit.

It is important for the electronic shelf label to reduce power consumption, and one technology for the purpose is the following Patent Literature 1 entitled "channel search method and communication apparatus using the same".
This technology involves having a circuit in an operating state during a period in which the electronic shelf label searches for a beacon from a base station, and shifting to a sleep state during other periods, to thereby reduce power consumption.

The electronic shelf label is required to operate on a small battery for at least several years. At the same time, there are cases where a large number of electronic shelf labels are overwritten in a short period of time, and hence it is necessary to ensure a quick response of the electronic shelf label while suppressing power consumption.
However, the electronic shelf label of Patent Literature 1 employs a fixed synchronization period. Therefore, there has been a problem in that, when the synchronization period is shortened to increase the speed of the response, power consumption is increased, and when the synchronization period is set longer to decrease power consumption, the response becomes slower.

### Citation List

### Patent Literature

[PTL 1] JP 2007-221392 A

### Summary of Invention

### Technical Problem

It is an object of the present invention to ensure the necessary speed of response while reducing power consumption of a wireless terminal.

### Solution to Problem

The present invention has been made in order to achieve the above-mentioned object, and in the invention according to claim 1, there is provided an information processing apparatus for transmitting information in a basic frame to wireless terminals, each of which maintains a sleep state and maintains an operating state at least during a period for receiving predetermined information for the wireless terminal itself, the information processing apparatus including: duration acquisition means for acquiring a duration of the basic frame; basic frame configuration means for configuring the basic frame of the acquired duration by using synchronization information, individual data, and timing information indicating a reception timing of next synchronization information in the basic frame for the each of the wireless terminals; and information transmission means for transmitting information configured as the basic frame.
In the invention according to claim 2, there is provided an information processing apparatus according to claim 1, in which the duration acquisition means acquires a first duration when there is at least one individual data item, and acquires a second duration longer than the first duration when there is no individual data.
In the invention according to claim 3, there is provided an information processing apparatus according to claim 1 or 2, in which the wireless terminals are divided into groups, and in which the basic frame configuration means divides in time the synchronization information, the individual data, and the timing information for each of the groups, and further divides in time the individual data, which has been divided in time for the each of the groups, in the each of the groups.
In the invention according to claim 4, there is provided an information processing apparatus according to claim 1, 2, or 3, in which the basic frame configuration means provides, in the basic frame, an individual data reception list divided in time for each group, for instructing a reception timing of the individual data for the each of the wireless terminals.
In the invention according to claim 5, there is provided an information processing apparatus according to claim 4, in which the basic frame configuration means provides, before the individual data reception list, presence/absence information representing presence or absence of the individual data for wireless terminals belonging to the each group in the individual data reception list.
In the invention according to claim 6, there is provided an information processing apparatus according to claim 5, in which the wireless terminals belonging to the each group are further divided into logical groups in the each group, and in which the presence/absence information is set for each of the logical groups.
In the invention according to claim 7, there is provided an information processing apparatus according to any one of claims 1 to 6, in which the basic frame configuration means provides, in the basic frame, a wireless terminal transmission period for the wireless terminals to transmit data.
In the invention according to claim 8, there is provided an information processing apparatus according to any one of claims 1 to 7, further including auxiliary synchronization information transmission means for transmitting auxiliary synchronization information at regular intervals between two temporally adjacent synchronization information items.
In the invention according to claim 9, there is provided an information processing apparatus according to any one of claims 1 to 8, further including: sleep information transmission means for transmitting sleep information for setting the wireless terminals to the sleep state; and recovery information transmission means for transmitting recovery information for causing the wireless terminals, which have been in the sleep state based on the transmitted sleep information, to recover from the sleep state, in which the recovery information transmission means repeats the transmission of the recovery information in a range including a maximum error of a clock with which the wireless terminals measure a predetermined time period.
In the invention according to claim 10, there is provided a wireless terminal, which receives information transmitted in a basic frame from the information processing apparatus according to claim 1, including: information reception means for receiving synchronization information, individual data, and timing information for the wireless terminal from the information transmitted in the basic frame based on timing information received in a preceding basic frame; and state control means for setting the information reception means to an operating state at least during periods for receiving the synchronization information, the individual data, and the timing information, and to a sleep state in other periods.
In the invention according to claim 11, there is provided a wireless terminal according to claim 10, in which, in the basic frame, an individual data reception list divided in time for each group, for instructing a reception timing of the individual data for each wireless terminal is transmitted, in which the information reception means receives the transmitted individual data reception list, and in which the state control means sets the information reception means to the operating state at a timing at which the individual data reception list is received and at the reception timing instructed in the individual data reception list, and sets the information reception means to the sleep state when the reception timing is not instructed in the individual data reception list.
In the invention according to claim 12, there is provided a wireless terminal according to claim 11, in which, in the basic frame, presence/absence information representing presence or absence of the individual data for wireless terminals belonging to the each group in the individual data reception list is transmitted before the individual data reception list, in which the information reception means receives the transmitted presence/absence information, and in which the state control means sets the information reception means to the operating state when the presence/absence information is received, and sets the information reception means to the sleep state at a time of receiving the individual data reception list when the presence/absence information represents that there is no individual data.
In the invention according to claim 13, there is provided a wireless terminal according to claim 12, in which the wireless terminals belonging to the each group are further divided into logical groups in the each group, the presence/absence information being set for each of the logical groups, and in which the state control means sets the information reception means to the sleep state at the time of receiving the individual data reception list when the presence/absence information for its own logical group represents that there is no individual data.
In the invention according to claim 14, there is provided a wireless terminal according to any one of claims 10 to 13, in which, in the basic frame, a wireless terminal transmission period for the wireless terminal to transmit data is provided, and in which the wireless terminal further includes data transmission means for transmitting data in the wireless terminal transmission period.
In the invention according to claim 15, there is provided a wireless terminal according to any one of claims 10 to 14, further including auxiliary synchronization means for synchronizing to auxiliary synchronization information, which is transmitted at regular intervals between two temporally adjacent synchronization information items, when the wireless terminal fails to receive the synchronization information transmitted in the basic frame, to thereby synchronize to the synchronization information to be transmitted in a next basic frame.
In the invention according to claim 16, there is provided a wireless terminal according to any one of claims 10 to 15, further including: sleep means for receiving a sleep signal and going to sleep for a predetermined time period; and recovery means for receiving a recovery signal in the sleep state and recovering from the sleep state.
In the invention according to claim 17, there is provided an information processing program for causing a computer to realize a function of transmitting information in a basic frame to wireless terminals, each of which maintains a sleep state and maintains an operating state at least during a period for receiving predetermined information for the wireless terminal itself, the information processing program causing the computer to realize: a duration acquisition function of acquiring a duration of the basic frame; a basic frame configuration function of configuring the basic frame of the acquired duration by using synchronization information, individual data, and timing information indicating a reception timing of next synchronization information in the basic frame for the each of the wireless terminals; and a transmission function of transmitting information configured as the basic frame.
In the invention according to claim 18, there is provided a wireless terminal program for causing a computer to realize a function of receiving information transmitted in a basic frame from the information processing apparatus according to claim 1, the wireless terminal program causing the computer to realize: an information reception function of receiving synchronization information, individual data, and timing information for a wireless terminal from the information transmitted in the basic frame based on timing information received in a preceding basic frame; and a state control function of setting the information reception function to an operating state at least during periods for receiving the synchronization information, the individual data, and the timing information, and to a sleep state in other periods.

### Advantageous Effects of Invention

According to the present invention, the synchronization period is changed, and hence the data communication may be performed at a necessary speed while reducing power consumption of the wireless terminal.

### Brief Description of Drawings

[FIG. 1] FIG. 1 is a diagram illustrating an example of a network configuration of a wireless communication system.
[FIG. 2] FIG. 2 is a diagram illustrating an example of hardware configurations of a management server, a relay unit, and a wireless terminal.
[FIG. 3] FIG. 3 is a diagram illustrating an example of a logical configuration of a group DB.
[FIGS. 4] FIGS. 4 are charts for illustrating a configuration of a basic frame.
[FIG. 5] FIG. 5 is a diagram illustrating the configuration of the basic frame in more detail.
[FIG. 6] FIG. 6 is a chart for illustrating a data communication operation of wireless terminals.
[FIG. 7] FIG. 7 is a chart for illustrating an auxiliary synchronization signal.
[FIG. 8] FIG. 8 is a diagram for illustrating switching between a fast mode and a normal mode.
[FIG. 9] FIG. 9 is a diagram for illustrating a sleep mode.
[FIG. 10] FIG. 10 is a message sequence chart for illustrating an overall operation of the wireless communication system.
[FIG. 11] FIG. 11 is a flow chart for illustrating a mode switching processing.
[FIG. 12] FIG. 12 is a flow chart for illustrating a procedure of a basic frame configuration processing of a management server.
[FIG. 13] FIG. 13 is a flow chart for illustrating a procedure of a reception processing.
[FIG. 14] FIG. 14 is a flow chart for illustrating an individual data reception processing.
[FIG. 15] FIG. 15 is a diagram for illustrating a modified example of an embodiment.
[FIG. 16] FIG. 16 is a diagram for illustrating another modified example of the embodiment.
[FIG. 17] FIG. 17 is a diagram for illustrating a main synchronization signal of the another modified example of the embodiment.
[FIGS. 18] FIGS. 18 are diagrams for illustrating group DBs of the another modified example of the embodiment.

### Description of Embodiment

### (1) Overview of Embodiment

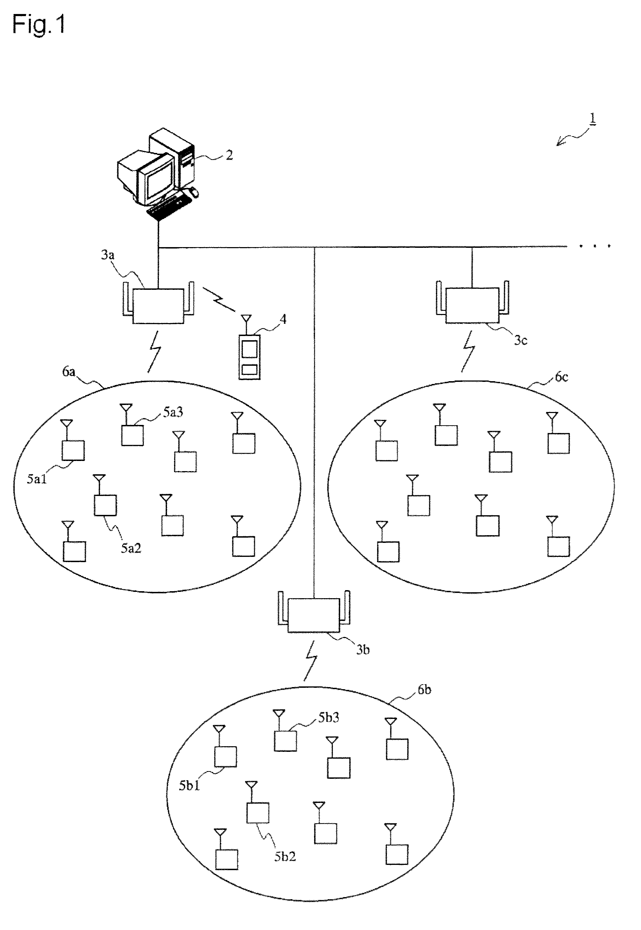

A management server 2 (FIG. 1) communicates with relay units 3 through a local area network (LAN), the relay units 3 are capable of communicating with wireless terminals 5, which are divided into groups, by short-range wireless communication, and the management server 2 transmits and receives information with the wireless terminals 5 through the relay units 3. The wireless terminals 5 are, for example, shelf labels placed on store shelves of a store.

The management server 2 performs transmission and reception with respect to the wireless terminals 5 in units of a basic frame, which is a section for transmitting and receiving data.
The basic frame contains a synchronization signal for synchronizing the wireless terminals 5 to the relay units 3 and a data group for the respective wireless terminals 5. The wireless terminal 5 receives self-addressed data while synchronizing with the relay unit 3 by means of the synchronization signal, and displays product information such as a product name and a price on a liquid crystal screen.
The management server 2 has a fast mode in which a duration of the basic frame is configured (generated) in T1 seconds and a normal mode in which the duration is configured in T2 seconds. In this case, T1<T2.
The wireless terminal 5 is configured to stay in a sleep state wherever possible, except for the reception of the synchronization signal and the communication of the data, to thereby suppress power consumption as much as possible.

The management server 2 configures the basic frame in the fast mode to transmit information consisting of communication signals when a quick response from the wireless terminal 5 is needed, for example, at the time of overwriting the displayed content, and configures the basic frame in the normal mode to transmit information when there is no data to be transmitted in particular and only the synchronization is to be maintained.
The wireless terminal 5 performs synchronization at intervals of T1 seconds in the fast mode, to thereby quickly respond to an instruction from the management server 2, and performs synchronization at intervals of T2 seconds in the normal mode in which the data reception is not needed, to thereby save power consumption in the wireless terminal 5.

As described above, the management server 2 causes the wireless terminal 5 to synchronize in the normal mode when a quick response from the wireless terminal 5 is not needed, to thereby save power consumption of the wireless terminal 5, and causes the wireless terminal 5 to synchronize in the fast mode when a quick response from the wireless terminal 5 is needed, to thereby synchronize the wireless terminal 5 at high speed.
Therefore, the management server 2 may decrease power consumption of the wireless terminal 5 and operate the wireless terminal 5 quickly.

For instance, in such an application as an electronic shelf label system, the data communication is not performed frequently, but when the data communication is actually performed, a high-speed response and a high-speed communication processing are required.
Therefore, in this embodiment, the duration of the basic frame is varied, to thereby reduce power consumption of a wireless terminal operating on a battery, with the result that a longer life of the battery may be realized and the above-mentioned demands may be satisfied.

### (2) Details of Embodiment

FIG. 1 is a diagram illustrating an example of a network configuration of a wireless communication system 1 of this embodiment.
The wireless communication system 1 is constituted of the management server 2, relay units 3a, 3b, ..., wireless terminals 5a1, 5a2, ... serving as electronic shelf labels, a mobile terminal 4, and the like.
The wireless communication system 1 serves as a variable-length basic frame communication system in which the duration of the basic frame is varied as described below.
Hereinafter, when the relay units and the wireless terminals are not specifically distinguished, the relay units and the wireless terminals are simply denoted by 3 and 5, respectively.

The management server 2 is a server for communicating with and setting the displayed content of the wireless terminals 5, and is placed, for example, in an office of a store or the like.
The management server 2 serves as an information processing apparatus for transmitting information in the basic frame to the wireless terminals, each of which maintains the sleep state (sleep) and maintains an operating state at least during a period for receiving predetermined self-addressed information.
The management server 2 communicates with the relay units 3 through a wired or wireless local area network (LAN) and with the wireless terminals 5 through the relay units 3.
The management server 2 thus transmits data (hereinafter, individual data) individually addressed to (for) the respective wireless terminals 5 to cause the wireless terminals 5 to overwrite the displayed content.

The management server 2 configures a data section called a basic frame, which contains the synchronization signal, the individual data for the respective wireless terminals 5, and the like and is transmitted to the wireless terminals 5, and has the fast mode in which the duration of the basic frame is T1 seconds (first duration) and the normal mode in which the duration is T2 seconds (second duration).
In this case, T1<T2, and in this embodiment, T1 is 3 seconds and T2 is 30 seconds, as an example.
In accordance with the durations, the wireless terminals 5 perform synchronization every 3 seconds in the fast mode, and every 30 seconds in the normal mode.

The management server 2 configures and transmits the basic frame in the normal mode when, for example, there is no individual data to be transmitted to the wireless terminals 5, because the wireless terminals 5 do not need to respond at high speed.
The management server 2 configures and transmits the basic frame in the fast mode when, for example, the mobile terminal 4 described below is switched ON or when data is to be transmitted from the management server 2, because the wireless terminal 5 needs to respond at high speed.

As described above, the management server 2 includes duration acquisition means for acquiring the first duration (T1) when there is at least one individual data item, and for acquiring the second duration (T2), which is longer than the first duration, when there is no individual data.

Further, in addition to the normal mode and the fast mode, the management server 2 may set the wireless terminals 5 to a sleep mode.
In the sleep mode, the management server 2 configures the basic frame for putting the terminal to sleep, to thereby put the wireless terminals 5 to sleep.
The sleep mode is used, for example, when the store is closed at night, during which the wireless terminals 5 do not need to operate, for putting the wireless terminals 5 to sleep, to thereby decrease power consumption further than the fast mode and the normal mode.
The management server 2 may transmit a wake-up notification to the wireless terminals 5 and cause the wireless terminals 5 to recover to a state of operating in the normal mode or the fast mode.

As described above, the management server 2 includes sleep information transmission means for transmitting sleep information for setting the wireless terminals 5 to the sleep state (basic frame for putting the terminal to sleep), and recovery information transmission means for transmitting recovery information (wake-up notification) for causing the wireless terminals 5, which have been in the sleep state in accordance with the sleep information, to recover from the sleep state.

The relay units 3 are placed, for example, on ceilings or pillars of the store, and communicate with the management server 2 through the LAN and with the wireless terminals 5 located nearby through short-range wireless communication, to thereby relay communication between the management server 2 and the wireless terminals 5.
The reason why the communication between the management server 2 and the wireless terminals 5 is relayed by the relay units 3 is because power consumption of the wireless terminals 5 may be reduced when the wireless terminals 5 perform short-range wireless communication with the relay units 3 than when the wireless terminals 5 perform far field communication.

The wireless terminals 5 are electronic shelf labels, and are each placed on a shelf of the store to display a name, a price, and the like of a product on a liquid crystal screen.
The wireless terminals 5 are divided into groups for each relay unit 3, and in the example of FIG. 1, for example, the relay unit 3a is associated with wireless terminals 5a1, 5a2, ... in a group 6a, and the relay unit 3b is associated with wireless terminals 5b1, 5b2, ... in a group 6b.
The groups 6 are formed by causing, when a wireless terminal 5 is placed on a store shelf, the wireless terminal 5 to search for the relay units 3 nearby and detect the relay unit 3 having the best radio wave condition, and linking the wireless terminal 5 and the relay unit 3 by the management server 2.

Though described later in detail, the basic frame is divided in time, and the wireless terminal 5 suppresses power consumption by sleeping in periods not necessary for the wireless terminal 5 itself except for the period in which the synchronization signal in the basic frame is received and the period in which self-addressed individual data and the like are received.
Therefore, in a case where there is no individual data addressed to the wireless terminal 5, a synchronization period is set longer in the normal mode, to thereby decrease the frequency of synchronizing the wireless terminal 5 and suppress power consumption of the wireless terminal 5.

The mobile terminal 4 is a handy terminal operated by a person in charge or the like of the store in a sales floor or the like for overwriting the displayed content of the wireless terminal 5.
When the mobile terminal 4 is set to an ON state by a user, the mobile terminal 4 communicates with the relay unit 3 having the best radio wave condition by, for example, short field communication to provide a notification that the mobile terminal 4 is turned ON to the management server 2. With the notification as the trigger, the management server 2 may switch from the normal mode to the fast mode.

The wireless terminal 5 displays a terminal ID in a form of a barcode or the like. The person in charge reads the terminal ID by the mobile terminal 4, and inputs an overwritten displayed content (such as discounted price) to be transmitted to the management server 2 through the relay unit 3.
Then, the management server 2 transmits the individual data to the wireless terminal 5 in the fast mode and overwrites the displayed content of the wireless terminal 5.

As described above, the management server 2 configures the basic frame in the normal mode to decrease power consumption of the wireless terminal 5 when a high-speed response of the wireless terminal 5 is not needed, and configures the basic frame in the fast mode to realize a high-speed response of the wireless terminal 5 when the high-speed response of the wireless terminal 5 is needed.
Then, when there is no need to synchronize the wireless terminal 5, the management server 2 configures the basic frame for putting the wireless terminal 5 to sleep, to thereby set the wireless terminal 5 to the sleep state and further save power consumption of the wireless terminal 5.

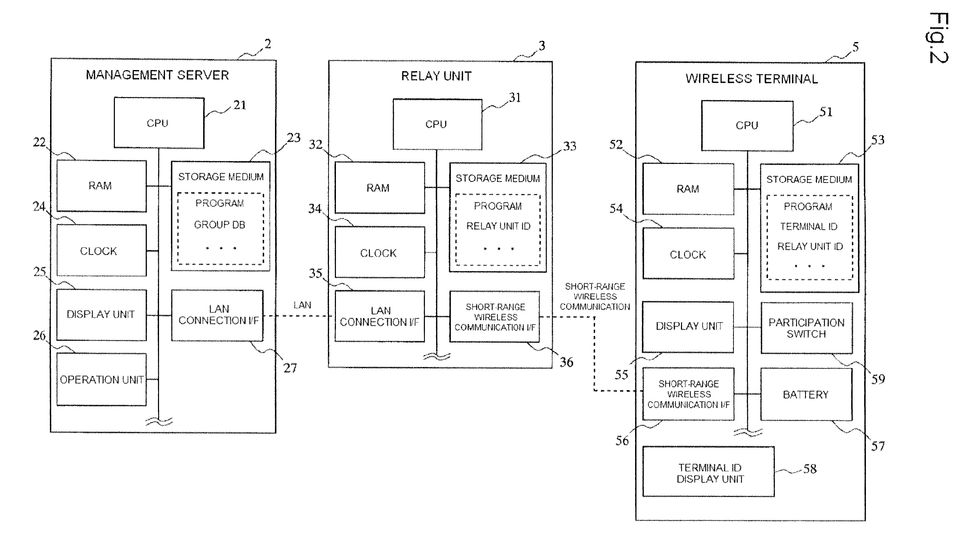

FIG. 2 is a diagram illustrating an example of hardware configurations of the management server 2, the relay unit 3, and the wireless terminal 5.
The management server 2 is constituted of a central processing unit (CPU) 21, a random access memory (RAM) 22, a storage medium 23, a clock 24, a display unit 25, an operation unit 26, a LAN connection interface (I/F) 27, and the like.
The CPU 21 is a central processing unit for executing programs stored in the storage medium 23 or the like to control various operations and sections of the management server 2.
The RAM 22 is a random access memory for providing a working memory to the CPU 21.

The storage medium 23 is constituted of, for example, a hard disk, a semiconductor device, or the like and stores various programs and data. In this embodiment, the storage medium 23 stores a program for communicating with the wireless terminal 5 or the like to manage the wireless communication system 1, a group database (DB) in which the wireless terminals 5 are divided into groups and registered, and the like.
The clock 24 is constituted of, for example, a crystal oscillator or the like and generates a clock signal.

The display unit 25 is constituted of, for example, a liquid crystal display or the like and displays various screens such as an operation screen used by the person in charge in operating the management server 2.
The operation unit 26 includes, for example, an operation terminal such as a keyboard and a mouse, and receives an operation on the management server 2 from the person in charge.
The LAN connection I/F 27 is a wired or wireless LAN and communicates with the relay unit 3.

The relay unit 3 includes a CPU 31, a RAM 32, a storage medium 33, a clock 34, a LAN connection I/F 35, a short-range wireless communication I/F 36, and the like.
The CPU 31 is a central processing unit for executing programs stored in the storage medium 33 or the like to perform a relay function or control sections of the relay unit 3.
The RAM 32 is a random access memory for providing a working memory to the CPU 31, and temporarily stores, among other things, information transmitted from the management server 2 before transmitting the information to the wireless terminal 5.

The storage medium 33 is constituted of, for example, a semiconductor device or the like and stores various programs and data. In this embodiment, the storage medium 33 stores a program for relaying communication between the management server 2 and the wireless terminal 5, and a relay unit ID, which is its own unique information.
The clock 34 is constituted of, for example, a crystal oscillator or the like and generates a clock signal.
The LAN connection I/F 35 is a wired or wireless LAN and communicates with the management server 2.
The short-range wireless communication I/F 36 performs short-range wireless communication with the wireless terminal 5.

The wireless terminal 5 includes a CPU 51, a RAM 52, a storage medium 53, a clock 54, a display unit 55, a short-range wireless communication I/F 56, a battery 57, a terminal ID display unit 58, a participation switch 59, and the like.
The CPU 51 is a central processing unit for executing programs stored in the storage medium 53 or the like to perform an electronic shelf label function or control sections of the wireless terminal 5.
The RAM 52 is a random access memory for providing a working memory to the CPU 51, and stores the relay unit ID of the relay unit 3 to which the wireless terminal 5 is associated when participating in the wireless communication system 1, the synchronization signal transmitted from the relay unit 3, and other such data.

The storage medium 53 is constituted of, for example, a semiconductor device or the like and stores various programs and data. In this embodiment, the storage medium 53 stores a program for communicating with the management server 2 to cause the display unit 55 to perform display, and a terminal ID, which is its own unique information.
The clock 54 is constituted of, for example, a crystal oscillator or the like and is used to count timings at which the wireless terminal 5 performs various processings and to measure time.
The display unit 55 is constituted by using, for example, a memory liquid crystal display, and is configured to consume power at the time of overwriting the displayed content and not to consume power during a display period.

The short-range wireless communication I/F 56 performs short-range wireless communication with the relay unit 3.
The battery 57 is constituted of, for example, a so-called button battery or the like and supplies power for driving the wireless terminal 5.
The terminal ID display unit 58 is a medium on which the terminal ID is printed in the form of the barcode or the like, and is attached to the surface of the wireless terminal 5 to be used when the terminal ID of the wireless terminal 5 is read by the mobile terminal 4 or the like.
The participation switch 59 is a button to be depressed when the wireless terminal 5 is placed on the store shelf to participate in the management server 2.
Note that, the participation switch 59 is not necessarily needed, and various forms may be possible, such as performing a participation processing automatically when, for example, the wireless terminal 5 is powered ON.

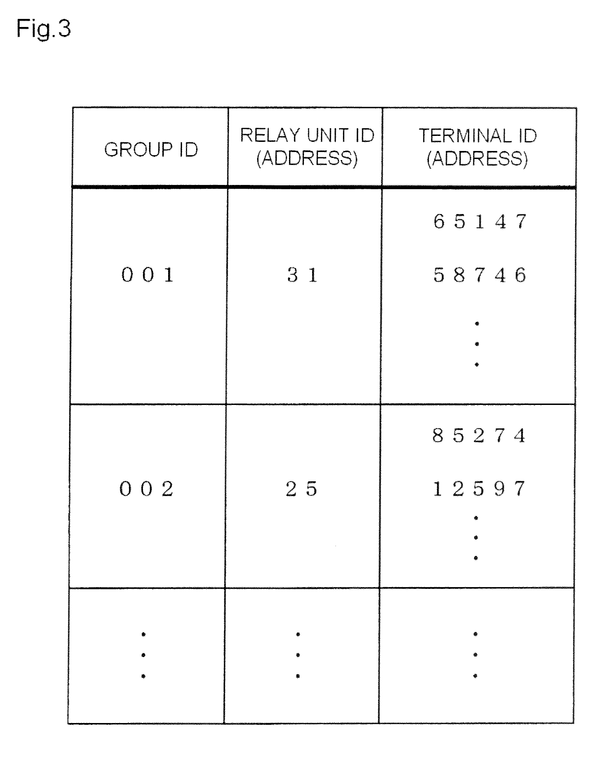

FIG. 3 is a diagram illustrating an example of a logical configuration of the group DB stored in the storage medium 23 of the management server 2.
The item "group ID" is an identification (ID) assigned to a group.
The item "relay unit ID" is the relay unit ID of the relay unit 3 belonging to the group, and one relay unit 3 is set for each group.
The item "terminal ID" includes terminal IDs of the wireless terminals 5 associated with the relay unit.

In the example of the figure, the relay unit 3 having the relay unit ID "31" is set to a group having the group ID "001", and the wireless terminals 5 having the terminal IDs "65147", ... are associated with the relay unit 3.
Note that, in this example, the relay unit ID and the terminal IDs are used as information for identifying the relay unit 3 and the wireless terminals 5, but any information such as addresses of the devices may be used as long as the devices may be identified.
Further, as described below in a modified example, logical groups may be set further in the group.

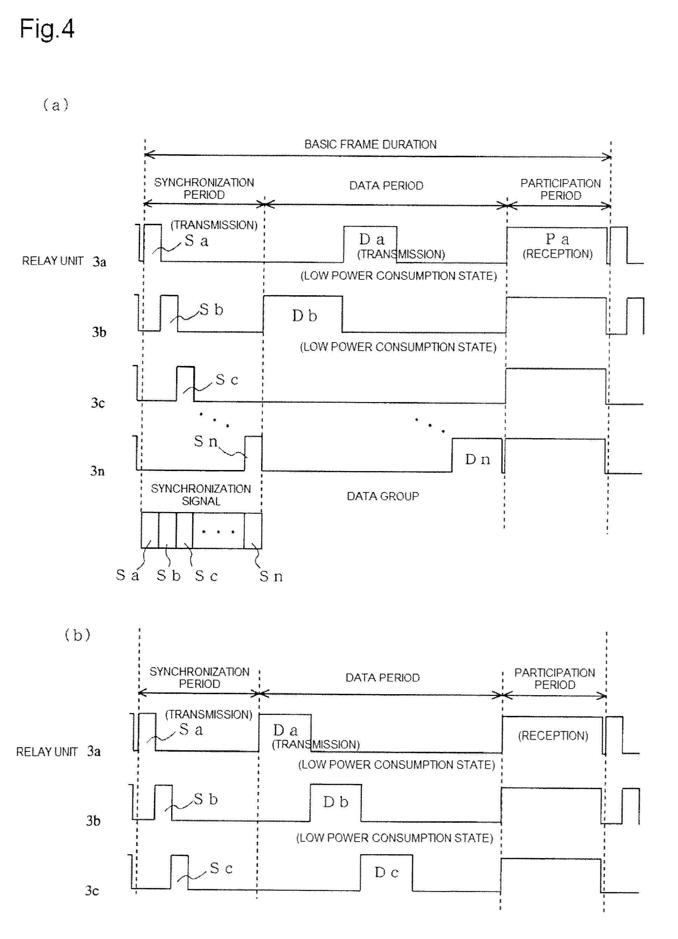

FIG. 4(a) is a chart for illustrating a configuration of the basic frame. This configuration is common to the normal mode and the fast mode.
The basic frame includes, in a duration of the basic frame, the synchronization period in which the synchronization signal is transmitted to the wireless terminals 5, a data period for transmitting a data group consisting of the individual data for the wireless terminals 5, and a participation period for transmitting data to be transmitted from the wireless terminals 5 to the management server 2, if any, in the stated order. The synchronization period is divided in time for each group 6 of the wireless terminals 5, and the data period is provided for each group 6.

A start timing of the data period is defined by a main synchronization signal (described later) to be transmitted in the synchronization period of the same group 6, and an end timing is a time point at which there is no more data to be transmitted.
As described above, the data period may be set arbitrarily by the main synchronization signal, and hence flexible operation may be performed depending on the situation. For example, the order of data transmission may be prioritized so that the group 6 having a larger amount of data transmits first, or the data period for the group 6 having a smaller amount of data may be shortened.

In the example of the figure, the synchronization period is divided in time into a synchronization period Sa for the relay unit 3a, a synchronization period Sb for the relay unit 3b, ..., and a synchronization period Sn for the relay unit 3n. In the synchronization periods, the synchronization signals addressed to the respective groups are transmitted.
The data period following the synchronization periods is sectioned, in accordance with the synchronization periods Sa to Sn, into a data period Da for the relay unit 3a (group 6a), a data period Db for the relay unit 3b (group 6b), ..., and a data period Dn for the relay unit 3n (group 6n), but the data periods for the relay units 3 are arranged so that the data period Db for the relay unit 3b comes first and then the data periods Da, .... Further, when there is no more data to be transmitted to the wireless terminal 5, a configuration in which a data period Dc is not provided as in the case of the relay unit 3c may be possible.
In addition, the duration of the data period Db is the longest, and the duration of the data period Da is the second longest, and the like.
A data period Di for the relay unit 3i (i=a, b, ...) is defined by the synchronization signal in a synchronization period Si for the relay unit 3i, and hence the management server 2 may thus flexibly configure the data periods.

As described above, the basic frame is sectioned for each relay unit 3 to which the wireless terminals 5 participate, that is, for each group to which the wireless terminals 5 belong. Each wireless terminal 5 synchronizes in a synchronization period of the group to which the wireless terminal 5 belongs, receives the individual data in the data period, and transmits the data to the management server 2 in the participation period.
For example, the wireless terminals 5 of the group 6a linked to the relay unit 3a synchronize in a synchronization period Sa, receive the individual data in the data period Da, and transmit data to be transmitted to the management server 2, if any, to the management server 2 in a participation period Pa.

Further, the data periods Da, Db, ... may be set arbitrarily, and as illustrated in FIG. 4(b), the data periods Da, Db, ... may be set to be divided in time in accordance with synchronization periods Sa, Sb, ....
As described above, in the basic frame, the data period is divided in time. However, the division is not fixed and the data period may be divided in time into any sections. Further, the management server 2 includes information for identifying the section in the main synchronization signal so that the wireless terminal 5 may receive data in the data period that is arbitrarily divided in time.
Therefore, the management server 2 may perform flexible and highly efficient data transmission depending on the situation, such as transmitting data with higher priority first intensively.

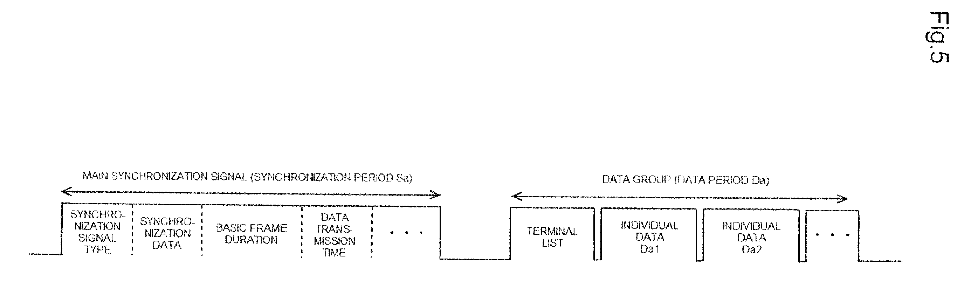

FIG. 5 is a diagram illustrating the configuration of the basic frame in more detail, and illustrates a part of the basic frame for the group 6a.
In a synchronization period Sa, the main synchronization signal for the wireless terminals 5 belonging to the group 6a is transmitted.
The main synchronization signal consists of a synchronization signal type, synchronization data, a basic frame duration, a data transmission time, a start timing of the participation period (not shown), and other such information.
As described below, the synchronization signal is categorized into the main synchronization signal and an auxiliary synchronization signal, and information indicating that the synchronization signal of interest is the main synchronization signal is transmitted as the synchronization signal type. This allows the wireless terminal 5 to recognize that the synchronization signal of interest is the main synchronization signal.

As the synchronization data, information for synchronizing the wireless terminals 5 with the relay unit 3 is provided, which allows the wireless terminals 5 to perform transmission and reception of data in synchronization with the relay unit 3.
As the basic frame duration, the duration of the basic frame is transmitted. The basic frame duration is set to 30 seconds in the normal mode, and to 3 seconds in the fast mode.
The wireless terminals 5 may acquire from the basic frame duration a synchronization timing with the basic frame to be transmitted next. Therefore, the wireless terminals 5 may perform synchronization in the normal mode and the fast mode in accordance with the basic frame.
For example, when the basic frame duration is 30 seconds, the wireless terminals 5 determine that the next basic frame is transmitted 30 seconds after the timing when the current basic frame is received, from which the reception timing for the next basic frame is calculated to perform a reception operation for the next basic frame at the calculated timing.

As described above, the wireless terminals 5 operate in the normal mode or the fast mode in accordance with the basic frame duration. This is because the management server 2 has set the duration to 30 seconds or 3 seconds.
Therefore, the operation mode may not be fixed to 30 seconds and 3 seconds, but the management server 2 may configure the basic frame at any duration for transmission so that the wireless terminals 5 may be synchronized in any synchronization period.

In the data transmission time, information for specifying the timing at which the data period Da starts is transmitted.
As described below, the data period Da starts from a terminal list, and the wireless terminals 5 perform a processing of detecting the terminal list in accordance with the timing specified by the data transmission time.
Further, when there is no communication data in the data period Da, information indicating that there is no communication data is transmitted as the data transmission time, such as setting the data transmission time to 0 seconds. This allows the wireless terminals 5 to recognize that there is no individual data for their own group 6a, and as described below, to suppress power consumption by sleeping for the data period Da.

Further, the wireless terminal 5 is configured to stop the reception operation when reception of all the self-addressed individual data has completed. Therefore, for example, a symbol representing the end of data is added to the tail of the individual data to be recognized by the wireless terminal 5.
As described above, the timing at which the data period Da starts is defined by the data transmission time, and the timing at which the data period Da ends is defined at the end of transmission of the individual data. Therefore, the management server 2 may arbitrarily set a start timing and the duration of the data period Da through the main synchronization signal.

As described above, the data transmission time also functions as a flag indicating whether there is at least one individual data item for the wireless terminals 5 belonging to the group 6a or there is no individual data.
In this embodiment, the data transmission time also has the function of the flag. However, a configuration may be adopted in which a flag representing whether or not there is the individual data may be provided in the main synchronization signal, based on which the wireless terminals 5 judge the presence or absence of the communication data addressed to their own group.

In the data period Da, a data group containing the terminal list and the individual data for the respective wireless terminals 5 is transmitted.
In the example of the figure, individual data Da1 for the wireless terminal 5a1, individual data Da2 for the wireless terminal 5a2, ... are arranged as the individual data.
Further, there is provided a period with no signal between periods of the terminal list and the individual data.
By thus providing an interval between transmission timings for the terminal list and the individual data, the wireless terminals 5 may detect the rising edge of the signal for reception, with the result that the wireless terminals 5 may perform the reception of the signal more easily.

The terminal list contains a list of the wireless terminals 5 to receive the individual data and a reception timing of the individual data.
For example, of the wireless terminals 5 belonging to the group 6a, when the wireless terminals 5 to receive data are the wireless terminals 5a1, 5a2, and 5a8, the terminal list contains the terminal IDs of the wireless terminals 5 and instructions of individual timings at which the wireless terminals 5 receive the individual data.

The wireless terminals 5 may judge whether or not there is self-addressed individual data by referencing the terminal list, and when there is the self-addressed individual data, perform a reception operation for the individual data based on the specified timings.
As described below, the wireless terminal 5 is adapted to sleep in a period in which the other wireless terminals 5 receive data and when there is no self-addressed data, to thereby reduce power consumption.
When the individual data is received, the wireless terminal 5 displays a product or updates the programs in accordance with the individual data.

Further, although not illustrated, the participation period Pa is provided after the data period Da.
The participation period Pa is a period provided for the wireless terminal 5a to transmit some data to the management server 2, and when the wireless terminal 5a has data to be transmitted to the management server 2, the wireless terminal 5a transmits the data to the management server 2 in the participation period Pa.
The participation period is used mainly when the wireless terminal 5 participates in the wireless communication system 1, that is, in a case where the wireless terminal 5 is placed on a shelf and searches for relay units 3 to notify the management server 2 of the relay units 3, and the management server 2 sets the wireless terminal 5 to be accommodated by an appropriate relay unit 3.
In addition, the participation period may be used for various applications, such as placing a temperature sensor in the wireless terminal 5 and notifying the management server 2 of the room temperature, or placing a button on the wireless terminal 5 and conveying, when a customer depresses the button, the depression to the management server 2.

As described above, the basic frame is constituted of the synchronization period, the data period, and the participation period as illustrated in FIG. 4, and the synchronization period and the data period are divided in time for each group.
Further, the data period divided in time for each group is divided in time for each wireless terminal 5 as illustrated in FIG. 5.
Therefore, the wireless terminals 5 may judge whether or not there is communication data for their own group based on the main synchronization signal, and may further judge, when there is the communication data addressed to their own group, whether or not there is self-addressed data based on the terminal list.

As described above, the management server 2 includes: duration acquisition means for acquiring the duration of the basic frame (the duration of the normal mode, the fast mode, and the like); basic frame configuration means for configuring the basic frame of the acquired duration by using synchronization information (synchronization data), the individual data, and timing information (basic frame duration) indicating the reception timing of the next synchronization information in the basic frame for the wireless terminals 5; and information transmission means for transmitting the configured information (the synchronization data, the individual data, the basic frame duration, and the like).

Further, the wireless terminals 5 are divided into groups. The management server 2 divides in time the synchronization information (synchronization data) of the basic frame, the individual data, and the timing information (basic frame duration) for each group as illustrated in FIG. 4, and further divides in time the individual data, which has been divided in time for each group, in the group as illustrated in FIG. 5.

Note that, in this embodiment, the main synchronization signal contains the synchronization information (synchronization data) and the timing information (basic frame duration).
The management server 2 provides, in the basic frame, an individual data reception list (terminal list) divided in time for each group, for instructing the reception timing of the individual data for each wireless terminal 5.

Further, the management server 2 provides presence/absence information (the data transmission time contained in the main synchronization signal) representing presence or absence of the individual data for the wireless terminals 5 belonging to the group in the individual data reception list (terminal list) before the individual data reception list (terminal list) in the basic frame.
In addition, the management server 2 provides a wireless terminal transmission period (participation period) for the wireless terminal 5 to transmit data in the basic frame.
In this case, the wireless terminal transmission period is mainly used, when there is data to be transmitted from the wireless terminal 5 to the management server 2, for transmitting the data, and there is no intention to limit the transmission from the wireless terminal 5 to the management server 2 to be performed in this period.
For example, also in the data period, the management server 2 and the wireless terminals 5 repeat transmission and reception of communication signals to perform processings.

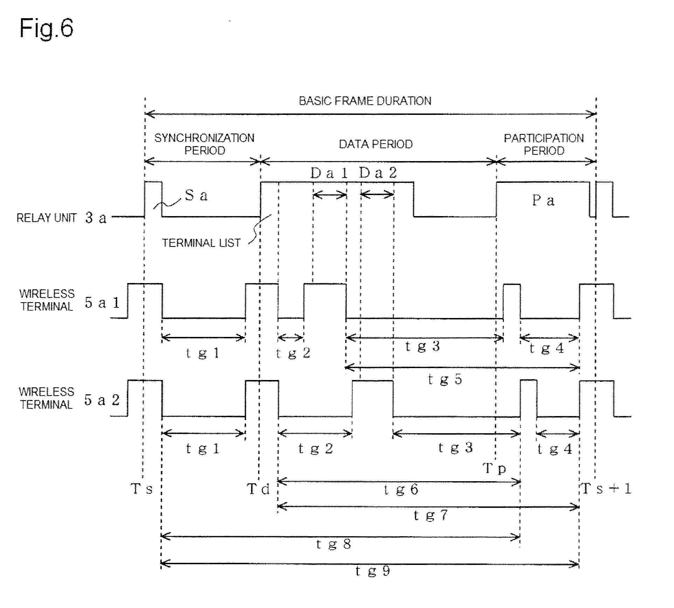

Next, referring to FIG. 6, a data communication operation performed by the wireless terminals 5 is described. The figure illustrates the basic frame to be relayed by the relay unit 3a for transmission and cases where the basic frame is received by the wireless terminals 5a1 and 5a2.
First, the wireless terminals 5a1 and 5a2 start a reception operation for the synchronization information a predetermined time period before a timing Ts at which the relay unit 3a enters the synchronization period Sa.

The reception operation is started the predetermined time period before the timing so as to receive a signal transmitted at a timing including a time difference between the clocks 34 and 54 of the relay unit 3 and the wireless terminal 5 from the rising edge of the signal.
The time to start the operation may be calculated by calculating, by the wireless terminals 5a1 and 5a2, a timing at which information is transmitted in the current basic frame from a basic frame transmission time length of the basic frame preceding the basic frame of interest and shifting the timing the predetermined time period backward.

When the wireless terminals 5a1 and 5a2 receive the main synchronization signal, the wireless terminals 5a1 and 5a2 verify the data transmission time contained therein.
When the data transmission time is, for example, 0 seconds, there is no individual data addressed to the wireless terminals 5a1 and 5a2. Therefore, the wireless terminals 5a1 and 5a2 calculate a time period tg8 until a timing at which the data is transmitted in the participation period when data is to be transmitted in the participation period, and a time period tg9 until a predetermined time period before a timing Ts+1 at which the next basic frame starts when the data is not to be transmitted in the participation period, and set a timer so that the wireless terminals 5a1 and 5a2 enter and maintain the sleep state during the time period tg8 or tg9.

In the sleep state, the wireless terminals 5a1 and 5a2 stop except for minimal functions such as a time measuring function using the clock 54 and a function of starting the reception operation at the set time, to thereby suppress power consumption.
This may prevent power consumption in a functional section (information reception means to be described below) for performing an information reception operation of the wireless terminal 5.

When the main synchronization signal contains the data transmission time, the wireless terminals 5a1 and 5a2 use the data transmission time to calculate a time period tg1 until a predetermined time period before a timing Td at which the terminal list is transmitted.
Then, the wireless terminals 5a1 and 5a2 set a timer and enter and maintain the sleep state during the time period tg1.
The wireless terminals 5a1 and 5a2 in the sleep state stop except for minimal functions such as the time measuring function using the clock 54 and the function of starting the reception operation at the set time, to thereby suppress power consumption.

When the time period tg1 elapses, the wireless terminals 5a1 and 5a2 restart the reception operation by wireless communication and receive the terminal list at the timing Td.
The wireless terminals 5a1 and 5a2 each verify whether or not its own terminal ID is registered in the terminal list, and when its own terminal ID is not registered in the terminal list, judge that there is no self-addressed individual data.
In this case, the wireless terminals 5a1 and 5a2 calculate a time period tg6 until the timing at which data is transmitted in the participation period when the data is to be transmitted in the participation period, and a time period tg7 until a predetermined time period before the timing Ts+1 at which the next basic frame starts when the data is not to be transmitted in the participation period, and set the timer so that the wireless terminals 5a1 and 5a2 enter and maintain the sleep state during the time period tg6 or tg7.

When, on the other hand, its own terminal ID is registered in the terminal list, each of the wireless terminals 5a1 and 5a2 reads from the terminal list a reception timing of the self-addressed individual data.
Then, the wireless terminals 5a1 and 5a2 calculate a time period tg2 until a predetermined time period before the reception timing of the individual data and enter the sleep state.
FIG. 6 illustrates a case where the individual data Da1 is transmitted to the wireless terminal 5a1 and the individual data Da2 is transmitted to the wireless terminal 5a2, and the wireless terminals 5a1 and 5a2 maintain the sleep state until a predetermined time period before timings at which the individual data Da1 and Da2 start to be transmitted, respectively.

When the time period tg2 elapses, the wireless terminals 5a1 and 5a2 restart a wireless communication operation and receive self-addressed data Da1 and Da2, respectively.
When the reception of the data Da1 and Da2 has completed, the wireless terminals 5a1 and 5a2 calculate a time period tg3 until the timing at which data is transmitted in the participation period when the data is to be transmitted in the participation period, and a time period tg5 until a predetermined time period before the timing Ts+1 at which the next basic frame starts when the data is not to be transmitted in the participation period, and set the timer so that the wireless terminals 5a1 and 5a2 enter and maintain the sleep state during the time period tg3 or tg5.

As described above, the wireless terminal 5 includes: the information reception means for receiving the self-addressed synchronization information (synchronization data), individual data, and timing information (basic frame duration) from the information transmitted in the basic frame based on the timing information (basic frame duration) received in the previous basic frame; and state control means for setting the information reception means to the operating state at least during periods in which the synchronization information, the individual data, and the timing are received, and to the sleep state in other periods.

The information reception means receives the individual data reception list (terminal list). The state control means sets the information reception means to the operating state at the timing at which the individual data reception list is received and at the reception timing instructed in the individual data reception list, and sets the information reception means to the sleep state when the reception timing is not instructed in the individual data reception list.

Further, in the wireless terminal 5, the information reception means receives the presence/absence information (data transmission time), and the state control means sets the information reception means to the operating state at the time of receiving the presence/absence information, and sets, when the presence/absence information represents that there is no individual data, the information reception means to the sleep state at the time of receiving the individual data reception list.
The wireless terminal 5 also includes data transmission means for transmitting data in the wireless terminal transmission period (participation period).

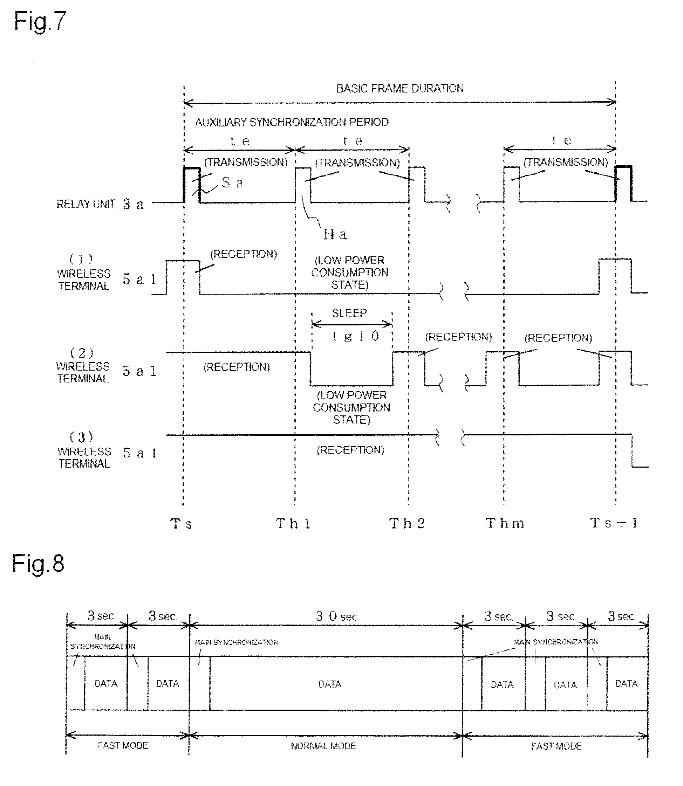

FIG. 7 is a chart for illustrating the auxiliary synchronization signal.
The management server 2 provides, in a basic frame transmission period, an auxiliary synchronization period Ha at timings Th1, Th2, ... for each auxiliary synchronization period te obtained by dividing in time the basic frame transmission period equally, and transmits the auxiliary synchronization signal in the auxiliary synchronization period Ha.
When synchronization fails in the synchronization period Sa, the wireless terminal 5 continues the reception operation for the radio signal without going to sleep and receives the auxiliary synchronization signal.

The auxiliary synchronization signal contains the synchronization signal type indicating that the information of interest is the auxiliary synchronization signal, and the relay unit ID of the relay unit 3, which allows the wireless terminal 5 to recognize that the information of interest is the auxiliary synchronization signal from the relay unit 3 to which the wireless terminal 5 belongs.
After synchronizing to the auxiliary synchronization signal, the wireless terminal 5 synchronizes to the next auxiliary synchronization signal in the auxiliary synchronization period te, and repeats the same operation to synchronize to the main synchronization signal of the next basic frame.
When the wireless terminal 5 successfully synchronizes to the auxiliary synchronization signal after failing to synchronize to the main synchronization signal, the wireless terminal 5 enters and maintains the sleep state during a time period tg10 until the next auxiliary synchronization period, to thereby reduce power consumption.

The waveform denoted by (1) indicates a case where the wireless terminal 5a1 is in synchronization with the main synchronization signal normally, in which synchronization to the basic frame is performed at intervals of the synchronization period Sa.
The waveform denoted by (2) indicates a case where the wireless terminal 5a1 fails to synchronize to the main synchronization signal and synchronizes to the auxiliary synchronization signal transmitted in the first auxiliary synchronization period Ha.
In this case, after synchronizing to the first auxiliary synchronization signal, the wireless terminal 5a1 synchronizes to the succeeding auxiliary synchronization signals until the wireless terminal 5a1 synchronizes to the next main synchronization signal. Then, the wireless terminal 5a1 enters and maintains the sleep state during the time period tg10 between the auxiliary synchronization periods, to thereby save power consumption.
The waveform denoted by (3) indicates a case where the auxiliary synchronization signal is not used. When the wireless terminal 5a1 fails to synchronize to the first main synchronization signal, the wireless terminal 5a1 must continue the reception operation until the next main synchronization signal, and the power is consumed accordingly.

As described above, the management server 2 transmits auxiliary synchronization information (auxiliary synchronization signal) at regular intervals between two temporally adjacent synchronization information items (the synchronization data of the main synchronization signal).
The wireless terminal 5 includes auxiliary synchronization means for synchronizing, when the wireless terminal 5 fails to receive the synchronization signal contained in the basic frame, to the synchronization information contained in the next basic frame by synchronizing to the auxiliary synchronization information transmitted at regular intervals between the two temporally-adjacent synchronization information items.

FIG. 8 is a diagram for illustrating switching between the fast mode and the normal mode performed by the management server 2.
The management server 2 sets the duration of the basic frame to 3 seconds to transmit the basic frame in the fast mode, and sets the duration of the basic frame to 30 seconds to transmit the basic frame in the normal mode.
As described above, the management server 2 may perform mode setting by selecting the duration of the basic frame.
Note that, the participation period is omitted in the figure.

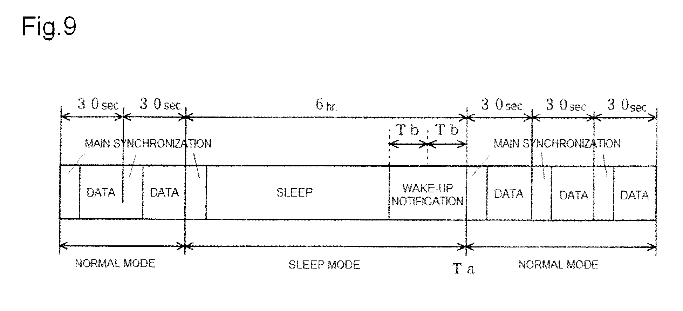

FIG. 9 is a diagram for illustrating the sleep mode of the wireless terminal 5.
When there is no need for the wireless terminal 5 to operate, for example, from the midnight to 6:00 a.m. because the store is closed at night, the wireless terminal 5 does not need to synchronize to the basic frame during the period. Therefore, the wireless terminal 5 may be put to sleep, to thereby save the power consumption of the wireless terminal 5.
In such case, the management server 2 configures and transmits the basic frame for putting to sleep, to thereby put the wireless terminal 5 to sleep.

The basic frame for putting to sleep contains information for starting reception of the wake-up notification after sleeping for a time period specified by the wireless terminal 5.
The wireless terminal 5 starts reception of the wake-up notification based on its own timer in a sleep period. However, the error of the clock 54 of the wireless terminal 5 becomes larger as a longer time period is measured, and hence the management server 2 sets the sleep period and transmits the wake-up notification taking the error into consideration.

It is assumed that, for example, the wireless terminal 5 is to synchronize to the basic frame at a timing Ta as illustrated in the figure. It is also assumed that the maximum value of the error in the time measured by the wireless terminal 5 is Tb.
In this case, the management server 2 causes, by means of the basic frame for putting to sleep, the wireless terminal 5 to start reception of the wake-up notification from a timing Ta-Tb, and repeats transmission of the wake-up notification from a timing Ta-2Tb.

When the wireless terminal 5 receives the wake-up notification, the wireless terminal 5 starts the reception operation for the main synchronization signal and synchronizes to the main synchronization signal transmitted at the timing Ta.
Taking the error of the clock 54 into consideration, all the wireless terminals 5 start the reception of the wake-up notification from the timing Ta-2Tb to the timing Ta, and hence all the wireless terminals 5 may be caused to synchronize to the basic frame at the timing Ta.
At this time, time information until the next main synchronization signal may be contained in the wake-up notification so that the wireless terminal 5 is set to the sleep state from the reception of the wake-up notification to the next main synchronization signal.
Further, while the wake-up notification is transmitted at regular intervals until the main synchronization signal, the wireless terminal 5 may use the wake-up notification as the auxiliary signal for synchronization until the main synchronization signal and enter the sleep state between the synchronization operations.

As described above, power consumption of the wireless terminal 5 is extremely low in the sleep mode, in which the wireless terminal 5 sleeps without performing the reception operation for the main synchronization signal and the auxiliary synchronization signal.
At the time of recovery from the sleep mode to the normal/fast mode, the wireless terminal 5 is out of synchronization, and hence the management server 2 transmits the wake-up notification for a time period corresponding to the expected synchronization error.

As described above, the management server 2 repeats the transmission of the recovery information (wake-up notification) in a range including a maximum error of a clock with which the wireless terminal 5 measures a predetermined time period (time until the start of the reception of the wake-up notification).
The wireless terminal 5 includes sleep means for sleeping for a predetermined time period when a sleep signal (basic frame for putting to sleep) is received, and recovery means for recovering from the sleep state when a recovery signal (wake-up notification) is received in the sleep state.

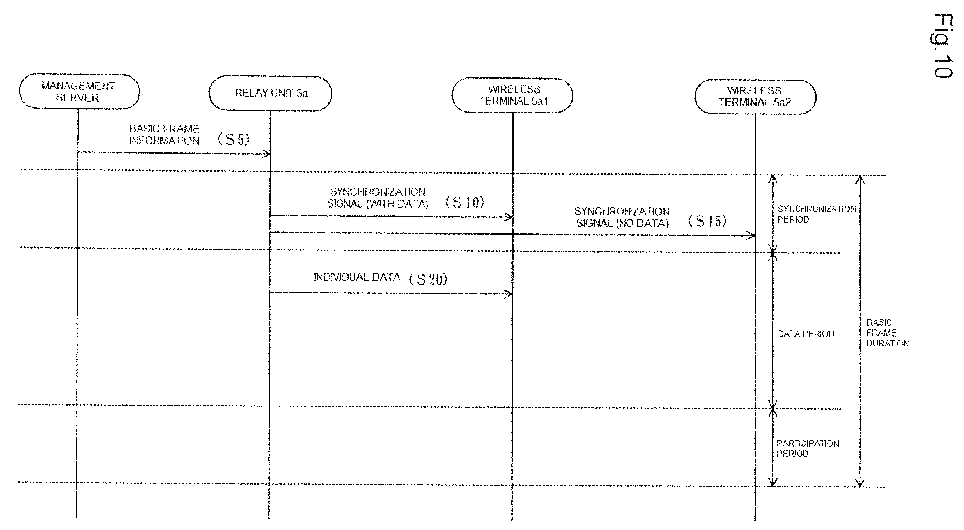

FIG. 10 is a message sequence chart for illustrating an overall operation of the wireless communication system 1.
The following processing is performed by the CPU 21 of the management server 2, the CPU 31 of the relay unit 3, and the CPUs 51 of the wireless terminals 5 in accordance with a predetermined program.
Here, as an example, the description is made using the relay unit 3a and the wireless terminals 5a1 and 5a2.
First, the management server 2 configures the basic frame and transmits information contained in the basic frame to the relay unit 3a (Step 5).
When the relay unit 3a receives information configured in the basic frame from the management server 2, the relay unit 3a converts the received information into a radio signal for short-range wireless communication and transmits the radio signal to the wireless terminals 5 nearby.

The wireless terminals 5a1 and 5a2 are in synchronization with the relay unit 3a, and receive the synchronization information in a synchronization period (Steps 10 and 15).
It is assumed that the basic frame contains the individual data for the wireless terminal 5a1 and does not contain the individual data for the wireless terminal 5a2.
Then, in the data period, the wireless terminal 5a1 receives the self-addressed individual data (Step 20).

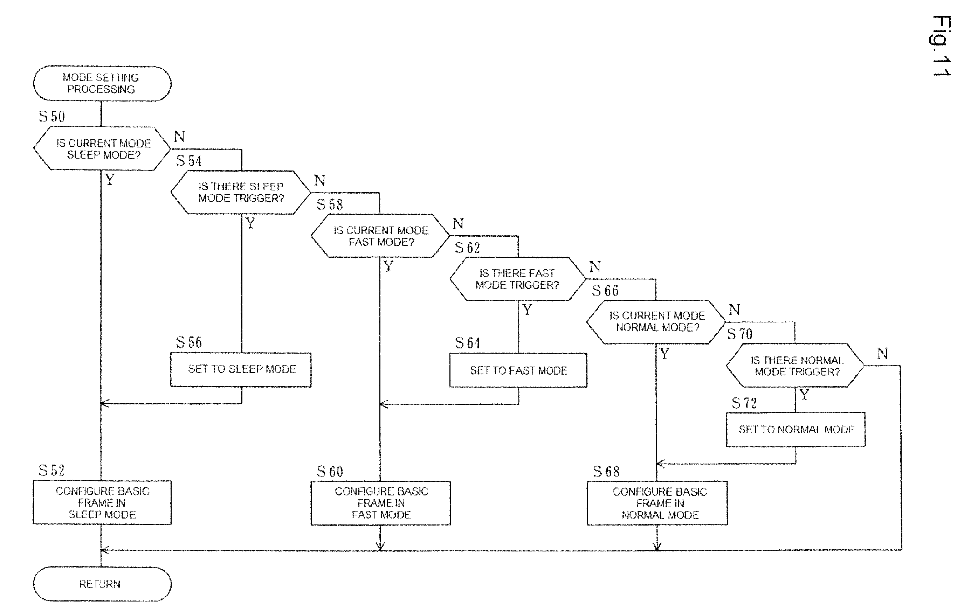

FIG. 11 is a flow chart for illustrating a mode switching processing performed by the management server 2.
The management server 2 first verifies whether or not the current mode is the sleep mode (Step 50). When the current mode is the sleep mode (Step 50; Y), the management server 2 configures the basic frame in the sleep mode (Step 52).

When the current mode is not the sleep mode (Step 50; N), it is judged whether or not there is a sleep mode trigger (Step 54).
The sleep mode trigger may be, for example, an output of the timer which provides notification of the start of the sleep period.
In this case, when the transition to the sleep mode is to be made, for example, from the midnight, the timer is set so as to provide notification of the start of the sleep period at the midnight.

When there is the sleep mode trigger (Step 54; Y), the management server 2 sets its operation mode to the sleep mode (Step 56) and configures the basic frame in the sleep mode (Step 52).
When there is no sleep mode trigger (Step 54; N), on the other hand, the management server 2 verifies whether or not the current mode is the fast mode (Step 58).
When the current mode is the fast mode (Step 58; Y), the management server 2 configures the basic frame in the fast mode (Step 60).

When the current mode is not the fast mode (Step 58; N), it is verified whether or not there is a fast mode trigger (Step 62). What to use as the fast mode trigger may be set arbitrarily in the system setting, and may be, for example, when switching ON of the mobile terminal 4 is detected or when display data is generated.
When there is the fast mode trigger (Step 62; Y), the management server 2 sets its operation mode to the fast mode (Step 64) and configures the basic frame in the fast mode (Step 60).

When there is no fast mode trigger (Step 62; N), on the other hand, the management server 2 verifies whether or not the current mode is the normal mode (Step 66).
When the current mode is the normal mode (Step 66; Y), the management server 2 configures the basic frame in the normal mode (Step 68).

When the current mode is not the normal mode (Step 66; N), it is verified whether or not there is a normal mode trigger (Step 70). What to use as the normal mode trigger may be set arbitrarily in the system setting, and may be, for example, when switching ON of the mobile terminal 4 cannot be verified or when display data is generated.
When there is the normal mode trigger (Step 70; Y), the management server 2 sets its operation mode to the normal mode (Step 72) and configures the basic frame in the normal mode (Step 68).
When there is no normal mode trigger (Step 70), the management server 2 returns to Step 50.

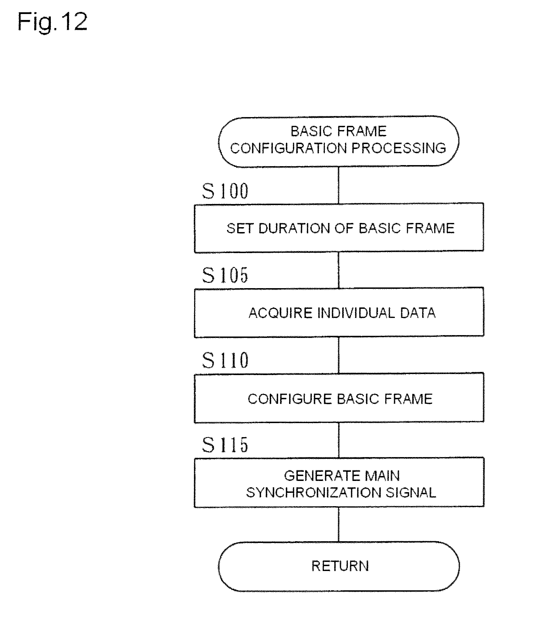

FIG. 12 is a flow chart for illustrating a procedure of a basic frame configuration processing of the management server 2.
This processing is a processing performed by the management server 2 in Steps 60 and 68 of FIG. 11.
First, the management server 2 sets the duration of the basic frame (Step 100). For example, the duration is set to 30 seconds in the normal mode and to 3 seconds in the fast mode.
Next, the management server 2 acquires the individual data to be transmitted to the wireless terminal 5 (Step 105), configures the basic frame (Step 110), and generates the main synchronization signal (Step 115).

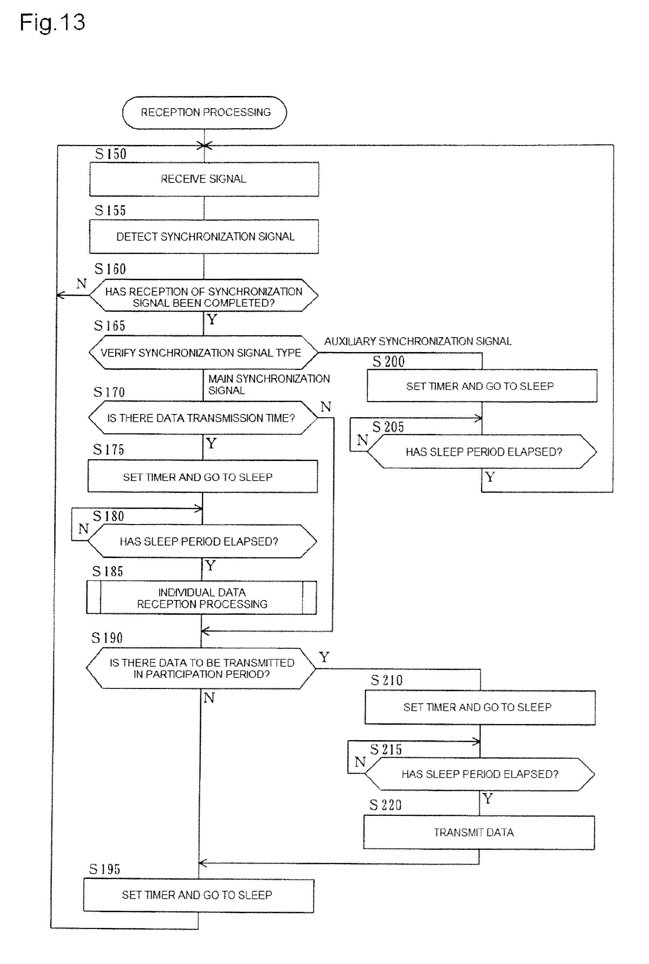

FIG. 13 is a flow chart for illustrating a procedure of a reception processing performed by the wireless terminal 5.
First, the wireless terminal 5 receives a signal (Step 150) and detects the synchronization information from the signal (Step 155).
Then, when the wireless terminal 5 has not completed the reception of the synchronization information (Step 160; N), the processing returns to Step 150 to continue the reception of the signal, and when the reception of the synchronization information has completed (Step 160; Y), the synchronization signal type contained in the synchronization information is verified (Step 165).

When the synchronization signal type is the main synchronization signal (Step 165; main synchronization signal), the wireless terminal 5 verifies whether or not the data transmission time is contained in the synchronization information (Step 170).
When the data transmission time is not contained (Step 170; N), there is no individual data to be received by the wireless terminal 5, and hence the processing proceeds to Step 190 to be described below.
When the data transmission time is contained (Step 170; Y), the wireless terminal 5 acquires the timing at which the individual data starts from the time specified by the data transmission time, and the wireless terminal 5 sets the timer so as to be activated before the timing and goes to sleep (Step 175).

The wireless terminal 5 judges whether or not a sleep period has elapsed by a timer function in the sleep period (Step 180). When the sleep period has not elapsed (Step 180; N), the wireless terminal 5 repetitively continues the judgment.
When the sleep period has elapsed (Step 180; Y), on the other hand, the wireless terminal 5 performs an individual data reception processing (Step 185).

Next, the wireless terminal 5 verifies whether or not there is data to be transmitted to the management server 2 in the participation period (Step 190).
When there is no data to be transmitted in the participation period (Step 190; N), the wireless terminal 5 sets the timer so as to start operation a predetermined time period before the synchronization timing of the next basic frame, which is obtained from the basic frame duration in the synchronization information, and goes to sleep (Step 195).

When there is data to be transmitted in the participation period (Step 190; Y), on the other hand, the wireless terminal 5 sets the timer so as to start operation at the timing for transmitting data in the participation period and goes to sleep (Step 210).
Then, the wireless terminal 5 judges whether or not the sleep period has elapsed by the timer function in the sleep period (Step 215). When the sleep period has not elapsed (Step 215; N), the wireless terminal 5 repetitively continues the judgment.

When the sleep period has elapsed (Step 215; Y), on the other hand, the wireless terminal 5 transmits data to the management server 2 through the relay unit 3 (Step 220).
Then, the wireless terminal 5 sets the timer so as to start operation a predetermined time period before the synchronization timing of the next basic frame and goes to sleep (Step 195).

Note that, in Step 165, when the synchronization signal type is the auxiliary synchronization signal (Step 165; auxiliary synchronization signal), the wireless terminal 5 sets the timer so as to start operation a predetermined time period before the timing of the next synchronization information (auxiliary synchronization signal or the main synchronization signal) with the use of the auxiliary synchronization period and goes to sleep (Step 200). In this embodiment, the auxiliary synchronization period is determined in advance by the wireless communication system 1 and is stored by the wireless terminal 5.

Then, the wireless terminal 5 judges whether or not the sleep period has elapsed by the timer function in the sleep period (Step 205). When the sleep period has not elapsed (Step 205; N), the wireless terminal 5 repetitively continues the judgment.
When the sleep period has elapsed (Step 215; Y), on the other hand, the processing returns to Step 150 in which the wireless terminal 5 performs reception of the signal.

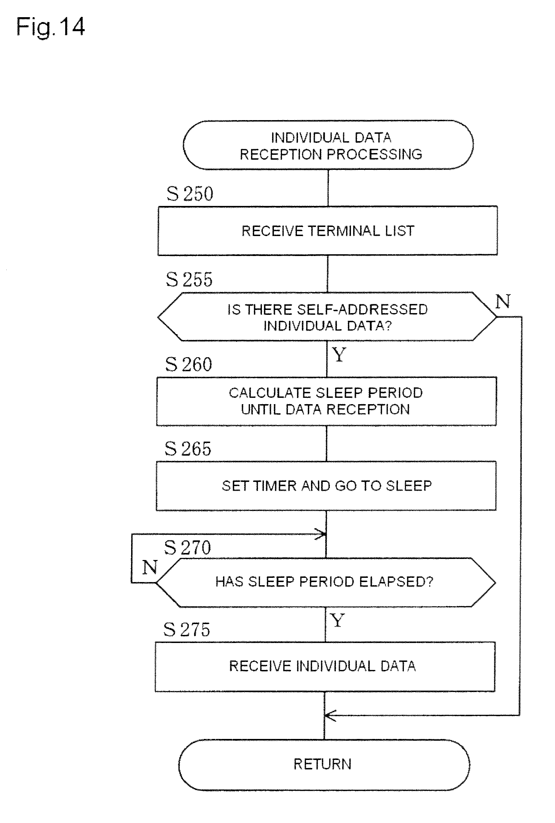

FIG. 14 is a flow chart for illustrating the individual data reception processing of Step 185 (FIG. 13).
First, the wireless terminal 5 receives the terminal list (Step 250) and verifies whether or not there is self-addressed individual data (Step 255).
When there is no self-addressed individual data (Step 255; N), the wireless terminal 5 returns to the processing of FIG. 13.

When there is self-addressed individual data (Step 255; Y), on the other hand, the wireless terminal 5 calculates a period for sleeping so as to start the reception operation the predetermined time period before a data transmission timing specified by the terminal list (Step 260), and sets the timer and goes to sleep (Step 265).
Then, the wireless terminal 5 judges whether or not the sleep period has elapsed by the timer function in the sleep period (Step 270). When the sleep period has not elapsed (Step 270; N), the wireless terminal 5 repetitively continues the judgment.
When the sleep period has elapsed (Step 270; Y), on the other hand, the wireless terminal 5 receives the individual data (Step 275).
When the reception of the individual data has completed, the wireless terminal 5 returns to the processing of FIG. 13.

### (Modified Example 1)

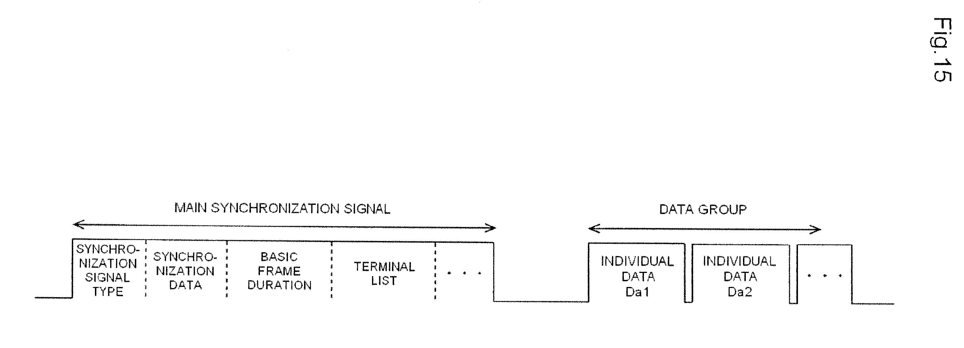

Next, referring to FIG. 15, a modified example of this embodiment is described.
In the embodiment described above, the data transmission time is provided as the presence/absence information representing the presence or absence of the individual data addressed to the group in the main synchronization signal and the terminal list is provided in the data group, but in this modified example, the terminal list is provided in the main synchronization signal.
In this modified example, the wireless terminal 5 judges whether or not there is self-addressed individual data based on the terminal list in the main synchronization signal. When there is the self-addressed individual data, the wireless terminal 5 receives the individual data at the timing specified by the terminal list. When there is no self-addressed individual data, the wireless terminal 5 enters the sleep state.

### (Modified Example 2)

Further, in this embodiment, the management server 2 switches among the normal mode, the fast mode, and the like at the same time for all the groups 6. However, in this modified example, the modes are selectively used for each group 6 so that, for example, the group 6a operates in the fast mode and the group 6b operates in the normal mode.

In order to set the operation mode for each group, in this modified example, group information for identifying the groups for which the channel is changed, and channel (frequency) information for identifying the channel to be used in the basic frame to be transmitted next are added to the main synchronization signal (the synchronization signal type, the synchronization data, the basic frame duration, the data transmission time, ...) in this embodiment.
In this manner, the management server 2 may specify, in the current basic frame, the channel used to receive the basic frame to be transmitted next for each group.

For example, when the management server 2 wants to operate only a particular group in the fast mode, the management server 2 transmits the group information specifying the group and the channel to be used in the fast mode in the basic frame, and when the group is to recover to the normal mode, the management server 2 transmits the group information specifying the group and the channel to be used in the normal mode in the basic frame.

In contrast, the wireless terminal 5 operates as follows.
The wireless terminal 5 receives the main synchronization signal from the relay unit 3 and analyzes the group information to judge whether or not the group to which the wireless terminal 5 belongs is specified. When its own group is specified in the group information, the wireless terminal 5 transmits and receives in the channel specified in the channel information at the start of the basic frame to be transmitted next.

In this manner, when the group information contains its own group, the wireless terminal 5 transmits and receives at the frequency specified in the channel information for the next basic frame, and may switch from the normal mode to the fast mode or recover from the fast mode to the normal mode.

This example is described with reference to the flow chart of FIG. 13.
First, after receiving the synchronization signal in Step 160, the wireless terminal 5 analyzes the group information and the channel information, and when the own group is contained, the wireless terminal 5 stores the channel specified in the channel information.
Then, after terminating the sleep in Step 195 and before proceeding to Step 150, the wireless terminal 5 switches its channel to the one specified in the channel information.
This allows the wireless terminal 5 to transmit and receive in the specified channel for the next basic frame.
When the frequency used in the channel is fixed, the storage of the channel information may be replaced by ON/OFF of a flag.

### (Modified Example 3)

In this embodiment, the groups 6 are formed by the relay units 3. However, in addition to the groups 6, logical groups such as "grocery" and "variety" may be set logically by the sales floor in which the wireless terminal 5 is placed.
By thus providing the physical groups by the relay units 3 and the logical groups by product attributes or the like in the wireless communication system 1, the wireless terminals 5 may be controlled more finely, to thereby further suppress power consumption.
Alternatively, the physical groups may be formed by the used channels (frequencies).

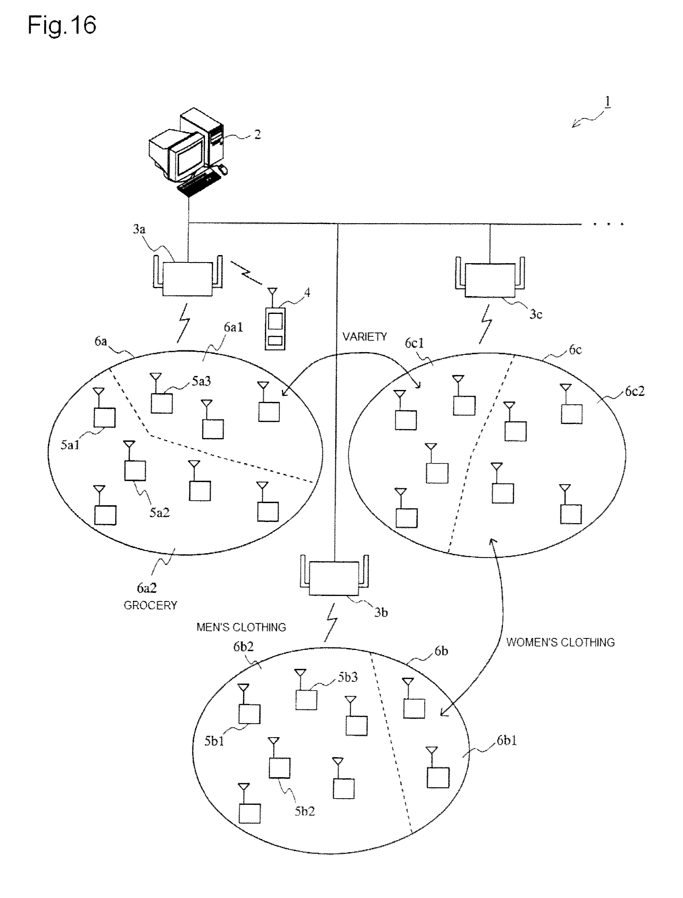

In FIG. 16, for example, the group 6a is sectioned into logical groups 6a1 and 6a2, the group 6b is sectioned into logical groups 6b1 and 6b2, and a group 6c is sectioned into logical groups 6c1 and 6c2.
In this example, the wireless terminals 5 belonging to the logical group 6a1 and the logical group 6c1 are placed in a variety section, and in an application installed in the management server 2, the wireless terminals 5 are set to a variety group.
Similarly, the wireless terminals 5 of the logical group 6a2 are placed in a grocery section and set to a grocery group, the wireless terminals 5 belonging to the logical group 6b2 are placed in a men's clothing section and set to a men's clothing group, and the wireless terminals 5 belonging to the logical groups 6b1 and 6c2 are placed in a women's clothing section and set to a women's clothing group.

The management server 2 provides logical group information for identifying the logical group to receive the individual data in the main synchronization signal. The wireless terminals 5 receive the individual data when the logical group to which the wireless terminals 5 belong is specified, and other wireless terminals 5 return to a normal state.
For example, when the management server 2 wants to transmit the individual data to the wireless terminals 5 in the variety group, the management server 2 transmits the logical group information specifying the logical group 6a1 in the main synchronization signal for the group 6a, and transmits the logical group information specifying the logical group 6c1 in the main synchronization signal for the group 6c.

Then, in the group 6a, only the wireless terminals 5 in the logical group 6a1 receive the individual data while the wireless terminals 5 in the logical group 6a2 are in the sleep state, and in the group 6c, only the wireless terminals 5 in the logical group 6c1 receive the individual data while the wireless terminals 5 in the logical group 6c2 are in the sleep state.

In this manner, when the logical groups are set to the groups formed by the relay units 3 in terms of hardware, logical groups corresponding to the situation of the store may be formed regardless of which one of the relay units 3 the wireless terminals 5 are associated with.
Therefore, the management server 2 may instruct the wireless terminal 5 to switch between the operating state and the sleep state more finely, to thereby decrease power consumption.

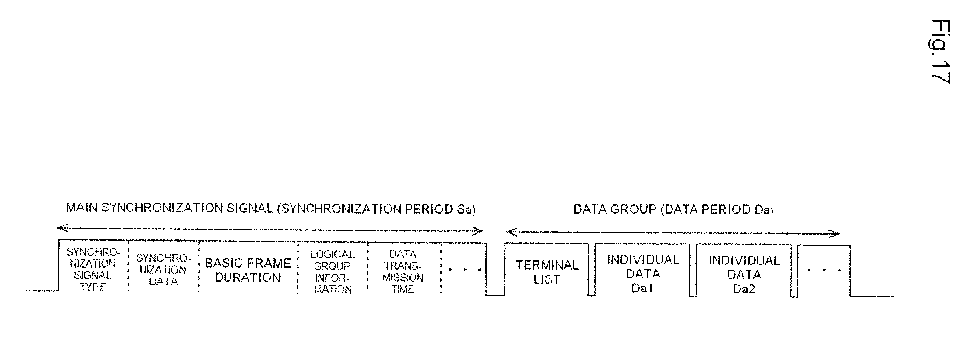

FIG. 17 is a diagram illustrating an example of a configuration of the main synchronization signal in this modified example.
The main synchronization signal contains the logical group information for specifying the logical group. The wireless terminal 5 stores the logical group to which the wireless terminal 5 belongs, and after receiving the main synchronization signal, verifies whether its logical group is specified in the logical group information.
Then, the wireless terminal 5 receives the terminal list when its logical group is specified, and enters the sleep state otherwise.

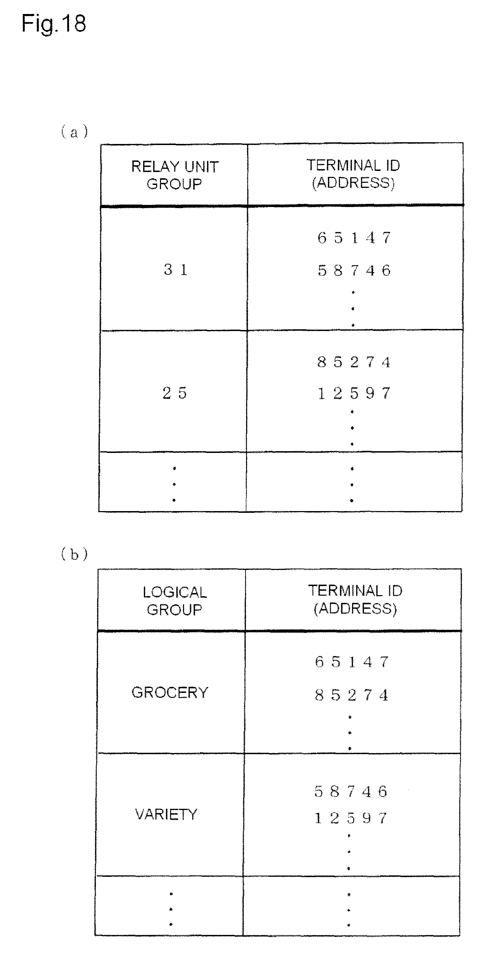

The management server 2 stores a relay unit group database (DB) defining the groups 6 (in the figure, denoted as a relay unit group, and hereinafter, referred to as a relay unit group) by the relay units 3 as illustrated in FIG. 18(a), and a logical group DB defining the logical groups as illustrated in FIG. 18(b).
As shown in the DBs, each wireless terminal 5 belongs to a relay unit group and to a logical group.

When a user wants to change display of a particular logical group, the management server 2 searches the logical group DB for wireless terminals 5 belonging to the logical group, and further searches the relay unit group DB for the found wireless terminals 5, to thereby identify the relay unit 3 to which each of the wireless terminals 5 is connected.
For example, when the individual data is to be transmitted to the wireless terminals 5 belonging to the variety group having a logical group ID of 01, the management server 2 specifies the logical group ID of 01 in the logical group information of the main synchronization signal for a group ID of 001 and the main synchronization signal for a group ID of 002.
Then, though at different synchronization timings, the individual data may be transmitted to the wireless terminals 5 belonging to the variety group, and the other wireless terminals 5 may be put to the sleep state.

As described above, in this modified example, the wireless terminals belonging to a group are further divided into logical groups in the group, and the presence/absence information is set for each logical group by the logical group information.
With the wireless terminals belonging to the group being further divided into logical groups in the group, and with the presence/absence information being set for each logical group, the state control means puts the information reception means to the sleep state at the time of receiving the individual data reception list when the presence/absence information for their logical group represents that there is no individual data.

According to this embodiment and the modified examples described above, the following effects may be obtained.
(1) In such application as the electronic shelf label, data communication is not performed frequently, but when data communication is actually performed, quick response and communication processing are required. This demand may be satisfied by varying, by the management server 2, the duration of the basic frame, and putting the wireless terminal 5 in the sleep state as long as the wireless terminal 5 does not need to operate.
(2) Power consumption of the wireless terminal 5 may be further reduced by minimizing the power consumption of the wireless terminal 5 in the sleep mode and not performing data communication until the reception of the wake-up notification with the use of the timer.
(3) Power consumption may be reduced by mode settings according to the forms of services of the store, such as operating in the normal mode during hours when the store is open, operating in the fast mode during hours of purchase and limited time discount, and transitioning to the sleep mode during hours when the store is closed to prolong the battery life.
(4) The mode switching may be performed automatically without the user noticing the modes by, for example, detecting power-ON of the mobile terminal 4 and transitioning from the normal mode to the fast mode. In this embodiment, the switching from the normal mode to the fast mode takes about 30 seconds, which is equal to or shorter than the time required for the user to operate the mobile terminal 4, and hence the user hardly notices the delay in response due to the normal mode.
(5) The wireless terminal 5 may quickly recover synchronization with the relay unit 3 by receiving the auxiliary synchronization signal even when the wireless terminal 5 fails to receive the main synchronization signal.
(6) In the sleep mode, the wake-up notification is transmitted in consideration of the error of the clock 54 of the wireless terminal 5, and hence an inexpensive crystal oscillator having reduced accuracy may be used as the clock 54.

Note that, in this embodiment, there has been described a case where the wireless terminal 5 is the electronic shelf label. However, this is not to limit the wireless terminal 5 to the electronic shelf label, and the wireless terminal 5 may be, for example, a wireless terminal used in applications in which a communication data amount or a communication time period is considerably smaller or shorter than the operating time period of the system, such as security systems for protecting against theft and detecting natural disasters such as an earthquake.
More specifically, in a warehouse management system, the wireless terminals 5 placed on shelves of a warehouse may be used for managing inventory such as products and parts on the shelves and managing entering and dispatching to and from the warehouse (display on the wireless terminals 5 on necessary shelves allows guidance to the storage location and quantity management). The wireless terminals 5 are normally operated in the normal mode and shifted to the fast mode at the time of entering to the warehouse (at the time when the management server 2 starts operation) to perform a necessary display processing or the like.

Further, in a security system, the wireless terminals 5 may be used as an alarm or sensor for detecting intrusion to a house or building or for detecting natural disasters such as an earthquake and rain. The wireless terminals 5 are operated in the normal mode when there is a security guard or patrol and in the fast mode at night or when needed (intrusion detection sensor).
Further, in a manufacturing support system, parts and their quantities necessary for each manufacturing process in an assembly line of a factory are displayed on the wireless terminals 5, to thereby obtain a fast manufacturing line with fewer operator errors. The present invention may also be applied to a medical field in, for example, preparing drugs in a pharmacy.

### Reference Signs List

- 1: wireless communication system
- 2: management server
- 3: relay unit
- 4: mobile terminal
- 5: wireless terminal
- 6: group
- 21: CPU
- 22: RAM
- 23: storage medium
- 24: clock
- 25: display unit
- 26: operation unit
- 27: LAN connection I/F
- 31: CPU
- 32: RAM
- 33: storage medium
- 34: clock
- 35: LAN connection I/F
- 36: short-range wireless communication I/F
- 51: CPU
- 52: RAM
- 53: storage medium
- 54: clock
- 55: display unit
- 56: short-range wireless communication I/F
- 57: battery
- 58: terminal ID display unit
- 59: participation switch

## Claims

1. An information processing apparatus for transmitting information in a basic frame to wireless terminals, each of which maintains a sleep state and maintains an operating state at least during a period for receiving predetermined information for the wireless terminal itself, the information processing apparatus comprising:
duration acquisition means for acquiring a duration of the basic frame;
basic frame configuration means for configuring the basic frame of the acquired duration by using synchronization information, individual data, and timing information indicating a reception timing of next synchronization information in the basic frame for the each of the wireless terminals; and
information transmission means for transmitting information configured as the basic frame.

2. An information processing apparatus according to claim 1, wherein the duration acquisition means acquires a first duration when there is at least one individual data item, and acquires a second duration longer than the first duration when there is no individual data.

3. An information processing apparatus according to claim 1,
wherein the wireless terminals are divided into groups, and
wherein the basic frame configuration means divides in time the synchronization information, the individual data, and the timing information for each of the groups, and further divides in time the individual data, which has been divided in time for the each of the groups, in the each of the groups.

4. An information processing apparatus according to claim 1, wherein the basic frame configuration means provides, in the basic frame, an individual data reception list divided in time for each group, for instructing a reception timing of the individual data for the each of the wireless terminals.

5. An information processing apparatus according to claim 4, wherein the basic frame configuration means provides, before the individual data reception list, presence/absence information representing presence or absence of the individual data for wireless terminals belonging to the each group in the individual data reception list.

6. An information processing apparatus according to claim 5,
wherein the wireless terminals belonging to the each group are further divided into logical groups in the each group, and
wherein the presence/absence information is set for each of the logical groups.

7. An information processing apparatus according to claim 1, wherein the basic frame configuration means provides, in the basic frame, a wireless terminal transmission period for the wireless terminals to transmit data.

8. An information processing apparatus according to claim 1, further comprising auxiliary synchronization information transmission means for transmitting auxiliary synchronization information at regular intervals between two temporally adjacent synchronization information items.

9. An information processing apparatus according to claim 1, further comprising:
sleep information transmission means for transmitting sleep information for setting the wireless terminals to the sleep state; and
recovery information transmission means for transmitting recovery information for causing the wireless terminals, which have been in the sleep state based on the transmitted sleep information, to recover from the sleep state,
wherein the recovery information transmission means repeats the transmission of the recovery information in a range including a maximum error of a clock with which the wireless terminals measure a predetermined time period.

10. A wireless terminal, which receives information transmitted in a basic frame from the information processing apparatus according to claim 1, comprising:
information reception means for receiving synchronization information, individual data, and timing information for the wireless terminal from the information transmitted in the basic frame based on timing information received in a preceding basic frame; and
state control means for setting the information reception means to an operating state at least during periods for receiving the synchronization information, the individual data, and the timing information, and to a sleep state in other periods.

11. A wireless terminal according to claim 10,
wherein, in the basic frame, an individual data reception list divided in time for each group, for instructing a reception timing of the individual data for each wireless terminal is transmitted,
wherein the information reception means receives the transmitted individual data reception list, and
wherein the state control means sets the information reception means to the operating state at a timing at which the individual data reception list is received and at the reception timing instructed in the individual data reception list, and sets the information reception means to the sleep state when the reception timing is not instructed in the individual data reception list.

12. A wireless terminal according to claim 11,
wherein, in the basic frame, presence/absence information representing presence or absence of the individual data for wireless terminals belonging to the each group in the individual data reception list is transmitted before the individual data reception list,
wherein the information reception means receives the transmitted presence/absence information, and
wherein the state control means sets the information reception means to the operating state when the presence/absence information is received, and sets the information reception means to the sleep state at a time of receiving the individual data reception list when the presence/absence information represents that there is no individual data.

13. A wireless terminal according to claim 12,
wherein the wireless terminals belonging to the each group are further divided into logical groups in the each group, the presence/absence information being set for each of the logical groups, and
wherein the state control means sets the information reception means to the sleep state at the time of receiving the individual data reception list when the presence/absence information for its own logical group represents that there is no individual data.

14. A wireless terminal according to claim 10,
wherein, in the basic frame, a wireless terminal transmission period for the wireless terminal to transmit data is provided, and
wherein the wireless terminal further comprises data transmission means for transmitting data in the wireless terminal transmission period.

15. A wireless terminal according to claim 10, further comprising auxiliary synchronization means for synchronizing to auxiliary synchronization information, which is transmitted at regular intervals between two temporally adjacent synchronization information items, when the wireless terminal fails to receive the synchronization information transmitted in the basic frame, to thereby synchronize to the synchronization information to be transmitted in a next basic frame.

16. A wireless terminal according to claim 10, further comprising:
sleep means for receiving a sleep signal and going to sleep for a predetermined time period; and
recovery means for receiving a recovery signal in the sleep state and recovering from the sleep state.

17. An information processing program for causing a computer to realize a function of transmitting information in a basic frame to wireless terminals, each of which maintains a sleep state and maintains an operating state at least during a period for receiving predetermined information for the wireless terminal itself, the information processing program causing the computer to realize:
a duration acquisition function of acquiring a duration of the basic frame;
a basic frame configuration function of configuring the basic frame of the acquired duration by using synchronization information, individual data, and timing information indicating a reception timing of next synchronization information in the basic frame for the each of the wireless terminals; and
a transmission function of transmitting information configured as the basic frame.

18. A wireless terminal program for causing a computer to realize a function of receiving information transmitted in a basic frame from the information processing apparatus according to claim 1, the wireless terminal program causing the computer to realize:
an information reception function of receiving synchronization information, individual data, and timing information for a wireless terminal from the information transmitted in the basic frame based on timing information received in a preceding basic frame; and
a state control function of setting the information reception function to an operating state at least during periods for receiving the synchronization information, the individual data, and the timing information, and to a sleep state in other periods.
